Europäisches Patentamt

(19) European Patent Office

Office européen des brevets

(11) Publication number: **0 068 025**
**B1**

# EUROPEAN PATENT SPECIFICATION

(45) Date of publication of patent specification: **04.11.87**

(51) Int. Cl.⁴: $G\ 01\ N\ 27/30$

(21) Application number: **81903068.5**

(22) Date of filing: **16.11.81**

(86) International application number:
**PCT/JP81/00334**

(87) International publication number:
**WO 82/01772 27.05.82 Gazette 82/14**

(54) REFERENCE ELECTRODE.

(30) Priority: **17.11.80 JP 162225/80**
**24.08.81 JP 133087/81**

(43) Date of publication of application:
**05.01.83 Bulletin 83/01**

(45) Publication of the grant of the patent:
**04.11.87 Bulletin 87/45**

(84) Designated Contracting States:
**CH DE GB LI SE**

(56) References cited:
**FR-A-2 392 381**
**GB-A-2 017 400**
**JP-A-54 081 897**
**JP-A-54 128 791**
**JP-A-55 101 852**
**JP-A-55 101 853**
**US-A-3 505 196**
**US-A-4 177 126**

The file contains technical information
submitted after the application was filed and
not included in this specification

(73) Proprietor: **SHIMADZU CORPORATION**
**378, Ichinofunairi-cho Kawaramachi-dori Nijo**
**Sagaru**
**Nakagyo-ku Kyoto 604 (JP)**

(72) Inventor: **OKA, Syotaro Shimadzu Corporation**
**Sanjo-Factory**
**1, Kuwabaracho Nishinokyo Nakagyo-ku**
**Kyoto-shi Kyoto 604 (JP)**
Inventor: **TAHARA, Shu Shimadzu Corporation**
**Sanjo-Factory**
**1, Kuwabaracho Nishinokyo Nakagyo-ku**
**Kyoto-shi Kyoto 604 (JP)**

(74) Representative: **Rodhain, Claude et al**
**Cabinet Claude Rodhain 30, rue la Boétie**
**F-75008 Paris (FR)**

Courier Press, Leamington Spa, England.

**Description**

Field of technology

This invention relates to a reference electrode to be used as the reference in measurement of the potential of electrode in case a working electrode is brought in contact with a solution and the component and its concentration are to be analyzed and controlled by measuring the interface potential of it, belonging to the fields of electrochemistry and its application.

Background of technology

In the analyzing method specially classified as "Pontentiometry" among electrochemical analysis methods, the concentration of component in a sample solution is analyzed by inserting a working electrode into the sample solution and measuring the interface potential, making use of such a phenomenon that the potential arising at the interface between the electrode and the solution is related to the component and its concentration comprised in said sample solution. As it is impossible to measure the interface potential directly in performance of the analysis method mentioned above, such a method is usually adopted that a reference electrode is inserted into the same sample solution as the counter electrode of the working electrode and the potential difference between the two electrodes is measured on the assumption that the potential of reference electrode is always constant.

Although a calomel electrode, a silver-silver chloride electrode, etc. is generally used as the reference electrode, calomel and silver chloride which are metallic salts are hard to dissolve and also silver chloride will change the potential corresponding to the activity of the chloride ion in the solution kept in contact with them. For this reason, such a method is practically taken that those electrodes mentioned above are immersed in an aqueous solution where the concentration of chloride ion is kept constant and a liquid junction is provided at a part of the boundary layer between the internal solution and a sample solution thereby making it possible to keep electrical conduction between the internal solution and the sample solution. For another example, such a method is taken that an aqueous solution of which the chloride ion concentration is kept constant is flowed little by little to the reference electrode to prevent the aqueous solution mixed with the sample solution from touching the reference electrode.

The measures mentioned above, however, will make it hard to measure the potential of an ion selective electrode precisely due to any variation of the potential arising at the junction (generally so-called "Junction Potential") and due to any change of the activity of chloride ion caused by mixing of the internal solution with the sample solution, ultimately causing precise chemical analyses such as biochemical analysis to be erroneous more or less.

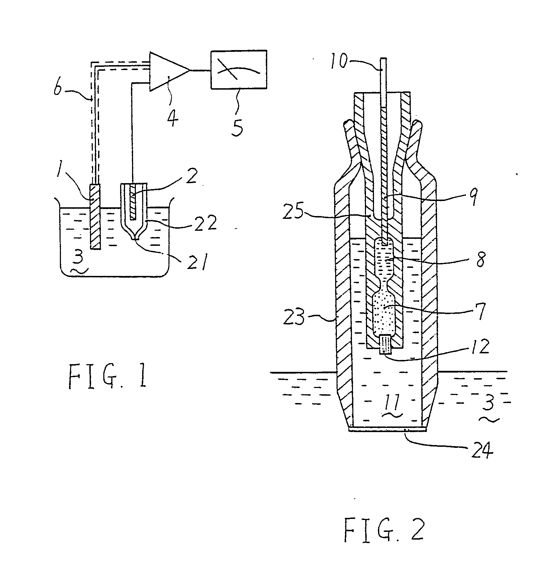

Fig. 1 shows the schematic structure of a conventional analyzer for potentiometry: (1) is the working electrode (that is, the ion selective electrode), (2) is the reference electrode which is inserted into the internal solution inside the vessel (22) having the pinhole type junction (21), (3) is a sample solution, and (4) is the amplifier functioning to amplify the potential between the electrodes (1) and (2) of which output is indicated by means of the meter (5). As for the input circuit of the amplifier (4), the lead wire connecting the electrode (1) to the amplifier (4) is applied with the shield (6) for the sake of reduction of noise. In the structure mentioned above, it is impossible to shut off any influence from the junction potential at the junction (21) or nullify any variation of the activity of ion due to mixture of the internal solution with the external one through the junction (21) as mentioned above and therefore it is hard to keep the potential of the reference electrode (2) constant at a highly precise level.

A reference electrode is also known from UK Patent application 2 017 400, which consists of an insulated-gate field-effect transistor with the surface of the gate region being coated with an ion-inactive hydrophobic organic polymer membrane.

Disclosure of the invention

This invention relates to those electrodes to be used for electromechanical analysis and, for potential measurement and control, specially to the reference electrode to be used as the counter electrode of a working electrode, providing a reference electrode which can keep the potential constant independent of any variations of the kinds of ions in a solution and of any change of the activity thereof at a highly precise level.

An important feature of this invention is to isolate the internal electrode of a reference electrode from a solution and/or electrolyte it is in contact with, by means of a polymer membrane having a ion-inactive molecular structure as specified in Claim 1.

Besides, by this invention a perfect solid state reference electrode is provided by covering the ion-sensitive part of a semiconductor ion sensor by means of an ion-inactive polymer membrane, evoluting the principle and structure mentioned above.

Additionally, this invention involves the use of a membrane synthesized with the plasma polymerization method as the most effective form of the ion-inactive polymer membrane mentioned above and proposes that said membrane newly providing thereby is to be applied to the reference electrode.

Further additionally, this invention, through pursuance of the specific structure of the ion-inactive structure of the above-mentioned, has explicated that such an unhomogeneous polymer structure of membrane of which inside, that is, the side to be in contact with the electrode is of very fine molecular structure and of which outside, that is, the parts thereof near the side to be in contact with a sample solution is of relatively coarse molecular structure is very effective and thus proposes that said unhomogeneous polymer membrane is to be applied to the reference electrode.

In this specification, "solution" means a material comprising ingredients and/or ions that are the objectives to be pursued in analyses or measurements which are dissolved therein in co-existing condition, broadly including waste water, dirty liquid, blood, urine, and other body fluids, etc., and any electrolyte solution for plating work and solid electrolytes which has come to be used recently, etc.

Also in this specification, "ion-inactive polymer membrane" means a polymer film having an inactive molecular structure from which any field potential will not be produced by dint of the ions kept in contact therewith and/or the activity of them or having an inactive molecular structure which will not be changed even if any field potential will be produced by dint of said ions and/or the activity of them, which is generally a material that will release relatively small density of ionized radicals from the surface thereof and of which resistance value is within the range of 1 MΩ between 5000 MΩ or so in most cases.

Furthermore in this specification, "reference electrode" means a generic term of the electrode to be provided as the counter electrode to a working electrode optionally provided in order to measure the potential of said electrode optionally provided, which counter electrode is to be the reference of potential to be used for measuring the relative potential between them, including recent semiconductive ion sensor, for example, the structure of reference electrode to be used for measuring the relative properties of an electrode in such a type of electrode of which properties can be detected in terms of electric current such as the transistor type of electrode making use of the field effect.

In summary, the invention relates to a reference electrode for use in the electrochemical analysis of an aqueous sample solution, comprising a membrane made of a particulate polymer material inactive to any ions contained in the sample solution, said membrane being disposed so as to isolate those parts of the reference electrode involved in the generation of a reference electrode being characterised in that the dimensions of the particles forming the membrane change, in a substantially continuous way, from coarse at the surface exposed to the sample solution to fine at the opposite surface, the structure of said membrane thereby being inhomogeneous with respect to its cross-section, the finest particles being so closely packed that the latter surface is impervious to ions and in that, within the interstices between said particles changing from coarse to fine, there is provided KCL forming a salt-bridge between the sample solution and the membrane.

The invention also relates to a process of fabricating a reference electrode as defined in Claim 7.

Brief description of drawings

Fig. 1 shows an example of conventional reference electrode;

Fig. 2, Fig. 3 and Fig. 4 show the longitudinal sectional views of embodiments of reference electrodes according to this invention respectively;

Fig. 2 shows the case of using an inactive polymer membrane independently;

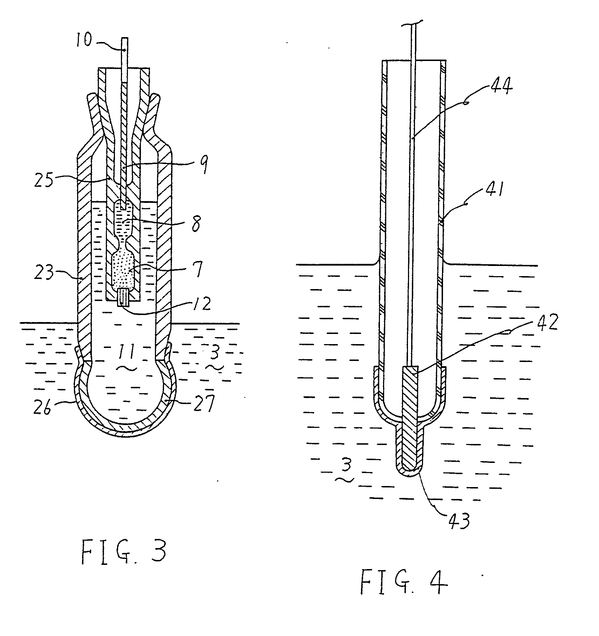

Fig. 3 shows the case of using said membrane being coated on an ion-active material;

Fig. 4 shows the case of using said membrane being coated directly on an electronductive material;

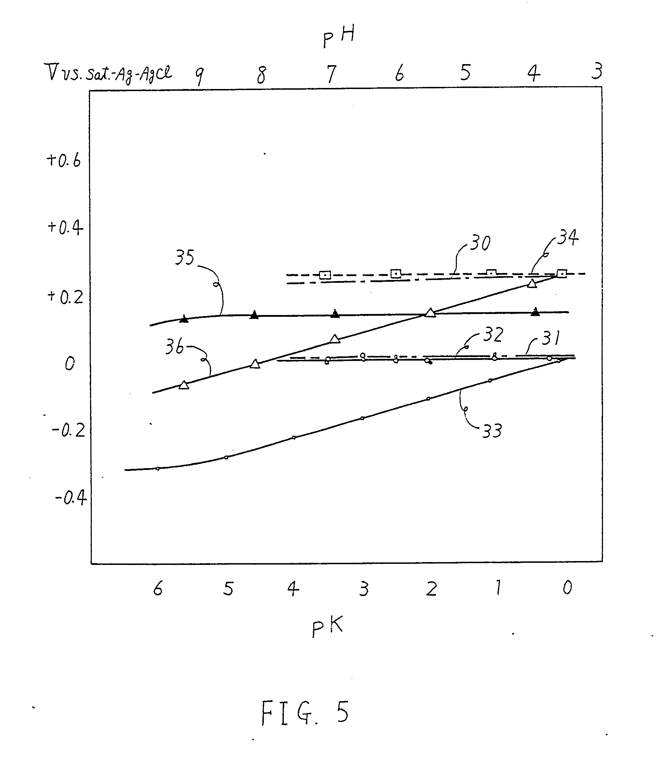

Fig. 5 shows the graph indicating the performance of each embodiment shown in Fig. 2 to Fig. 4;

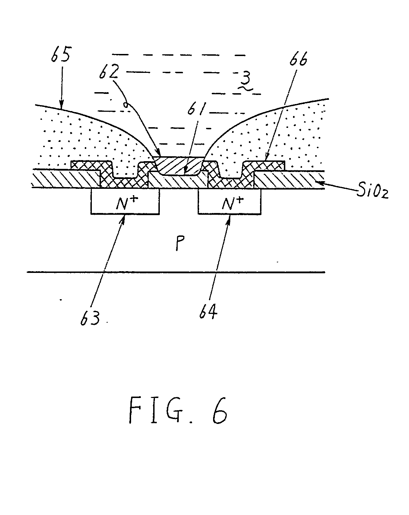

Fig. 6 shows an embodiment of this invention applied to a field effect transistor;

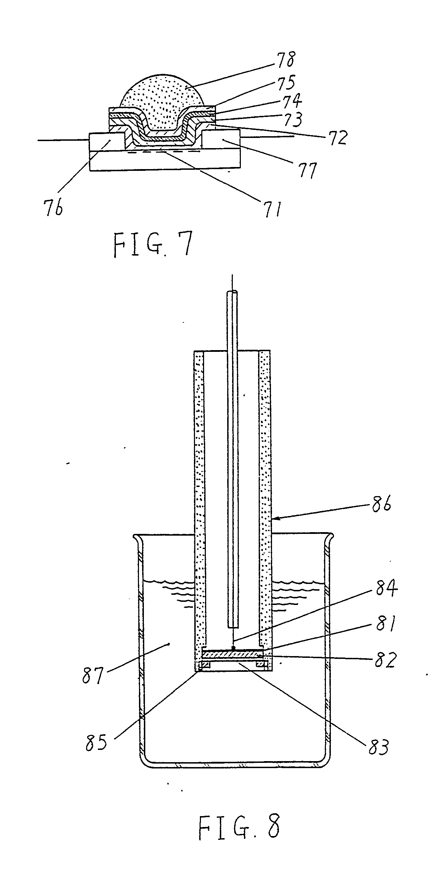

Fig. 7 to Fig. 9 show the embodiments of devices using the polymer membrane coated with the plasma polymerization method respectively;

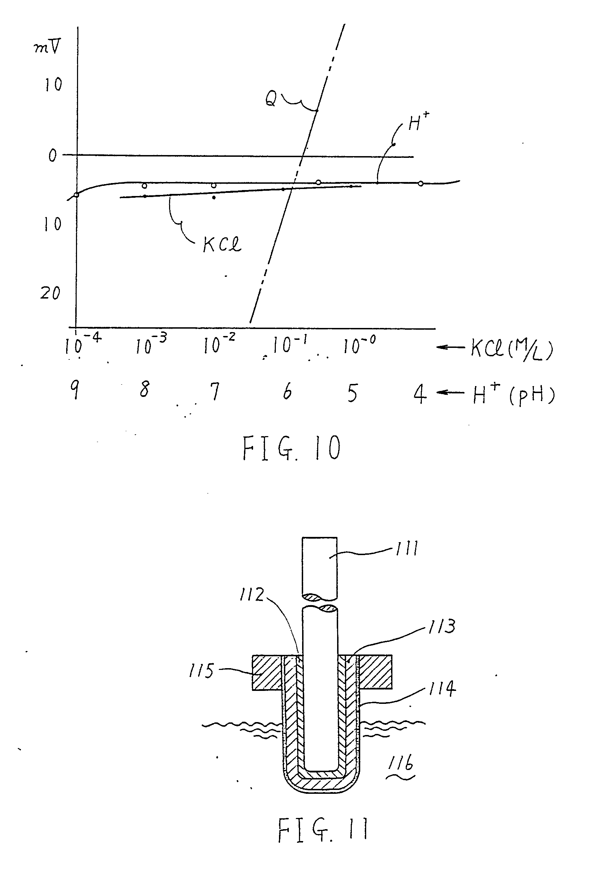

Fig. 10 shows the graph indicating the performance of the device shown in Fig. 8;

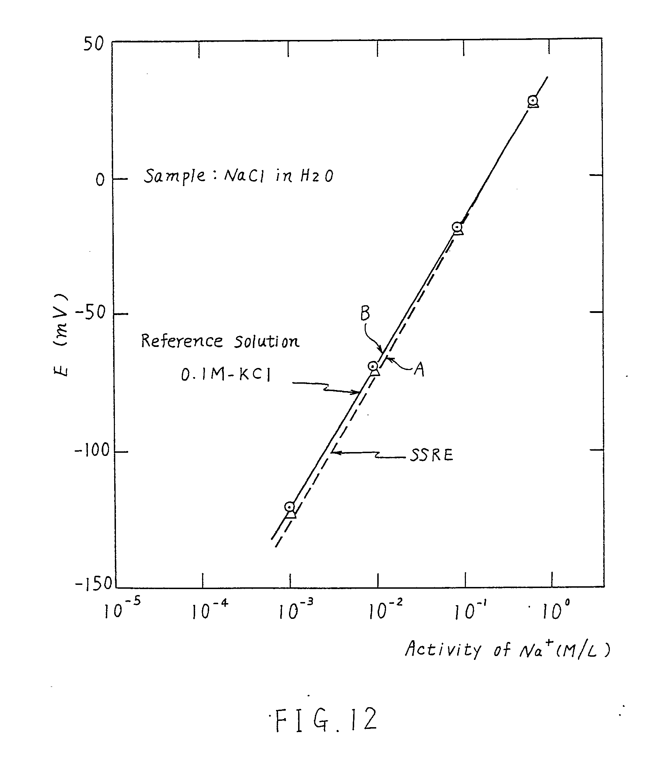

Fig. 11 shows another embodiment of device using the polymer membrane coated with the plasma polymerization method;

Fig. 12 to Fig. 15 show the graphs indicating the performance of the device shown in Fig. 11;

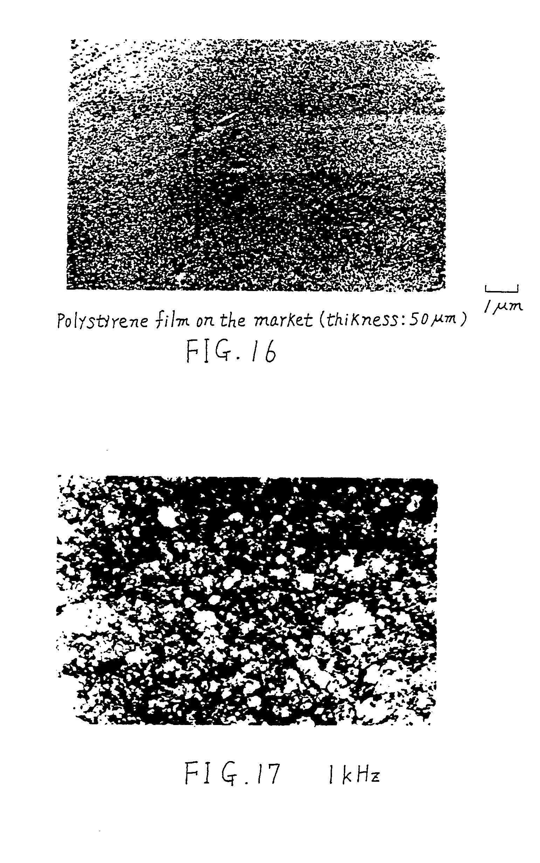

Fig. 16 shows an enlarged photograph of the surface of an ordinary polystyrene film;

Fig. 17 to Fig. 19 show enlarged photographs of the polystyrene layers coated with the plasma polymerization method;

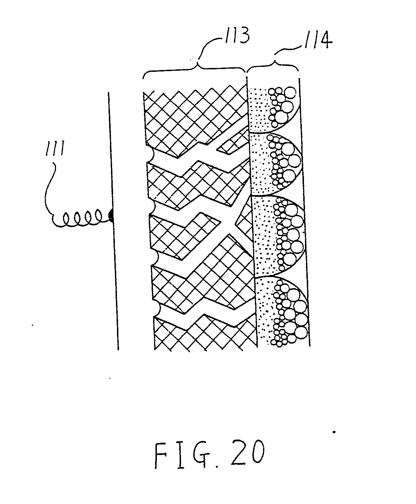

Fig. 20 shows the sectional structural view of a polymer film coated with the plasma polymerization method;

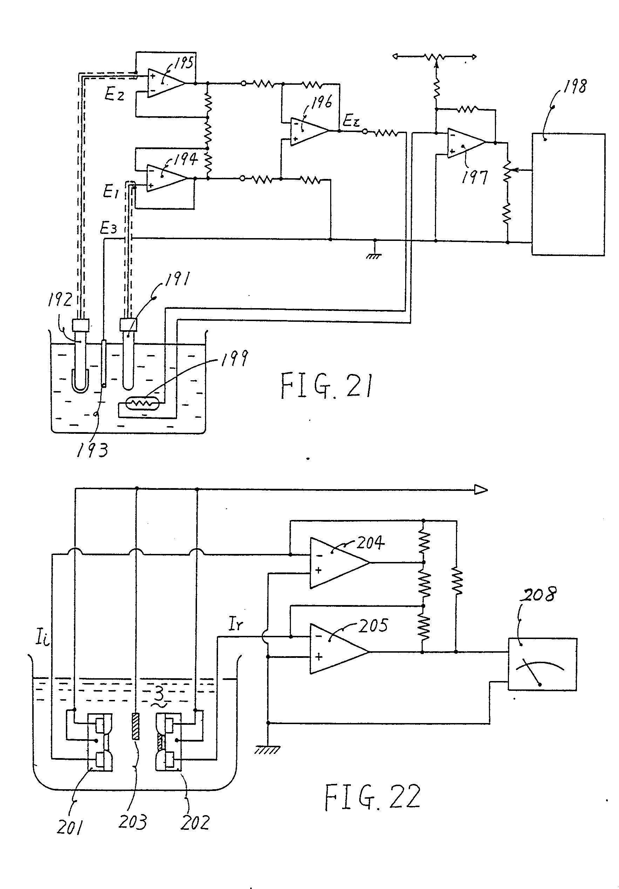

Fig. 21 to Fig. 28 show applied devices of the reference electrode according to this invention;

Fig. 21 and Fig. 22 show the devices for measuring the potential between electrodes as per the 3-electrode method;

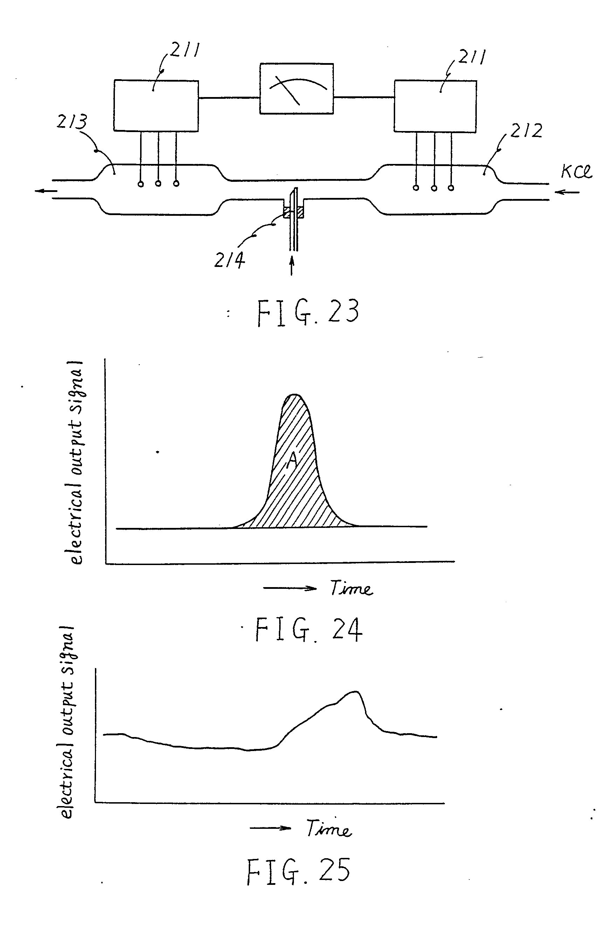

Fig. 23 shows the constitution of a fluid continuous analysis system;

Fig. 24 and Fig. 25 shows the graphs indicating the performance of the device shown in Fig. 23;

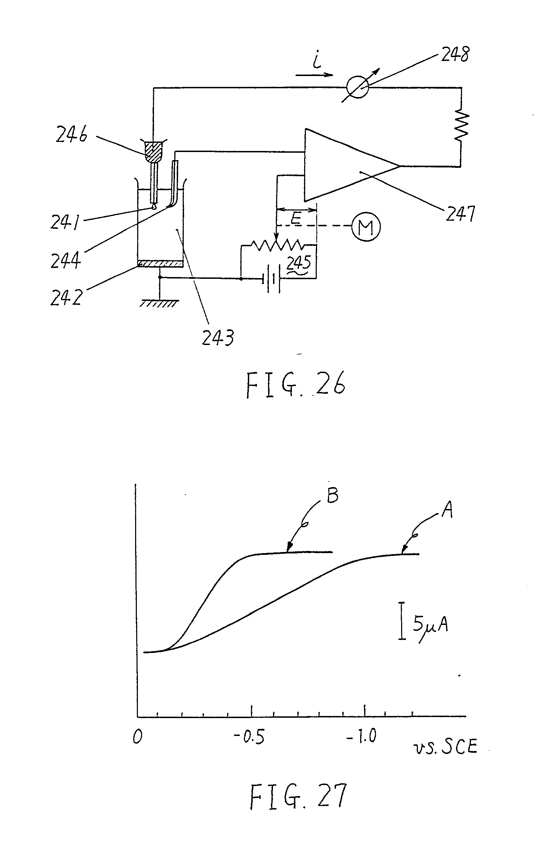

Fig. 26 shows the constitution of an electrolytic analysis device;

Fig. 27 shows the performance of the device shown in Fig. 26; and

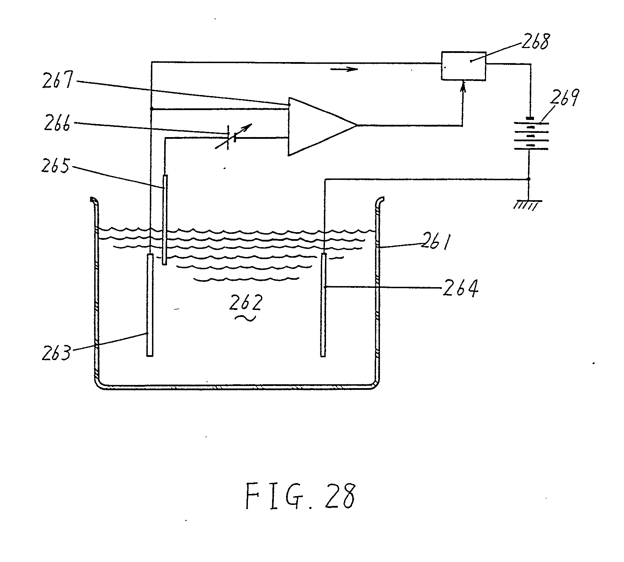

Fig. 28 shows the constitution of a constant potential analysis device.

The best form for embodying the invention

Fig. 2 shows the longitudinal sectional drawing of the reference electrode relating to an embodiment of this invention. (23) is the protective tube of which end is airtightly adhered with the polymer membrane (usually 0.01 to 100 μm thick) (24), and the protective tube (23) and the membrane (24) constitute the vessel

3

for the internal solution for the reference electrode. (25) is the glass tube for holding the calomel of which lower end's hole is plugged with the porous plug (12) such as a cotton plug, the lower half part inside the tube is filled with the calomel (7), the upper half part inside said tube is filled with the quick silver (8), the platina wire (9) is inserted into the quick silver (8) from over the same, and the upper end of said platina wire (9) is connected to the lead wire (10). The inside of the protective tube (23) is filled with a constant concentration of potassium chloride (KCl) (11), the glass tube (25) is immersed in said KCl water solution, and said KCl water solution is in contact with the calomel (7) through the cotton plug (12). In such a structure as mentioned above, the part of said membrane (24) is immersed in a sample solution (3). As the membrane (24) has no holes provided thereon, the KCl aqueous solution is completely secluded from a sample solution.

In the structure shown in Fig. 2, the interface potential between the aqueous solution (11) in the protective tube (23) and the inner surface of the inactive membrane (24) is constant by the same reason as the outer surface. The interface potential between the outer surface of the membrane (24) and a sample solution (3) is constant to the ion comprised in said sample solution (3). As the membrane (24) is completely adhered with said protective tube (23) to be air-tight against said sample solution, it is completely prevented to allow such a phenomenon even if any differences arise between the inside and outside of said membrane in pressure and/or temperature that said sample solution will get into said protective tube to change the concentration of said KCl aqueous solution (11) thereby varying the reference potential or that said KCl aqueous solution (11) in said protective tube will leak out into said sample solution thereby polluting sample solution.

Fig. 3 shows an ion-inactive polymer film formed on the surface, of a membrane constituting the liquid junction, which is in contact with a sample solution.

In Fig. 3, an ion-active polymer film (26) is formed on an ion-active film, for example, a glass film (27) for measuring pH and said ion-active film (27) is completely secluded from a sample solution by means of said polymer film. The construction of any other parts is the same as that of the embodiment of device shown in Fig. 2.

Although an ordinary glass electrode for measuring pH will change its output at the rate of approximately 59 mV corresponding to variation of one unit of the pH of a sample solution it is in contact with at the temperature of 25°C, adhering an ion-inactive polymer film with the electrode to form as specified in this invention will modify said electrode to be inactive to pH. Also in this invention, it is possible to provide an ion-inactive electrode in such a way as adhering the above-mentioned ion-inactive polymer film direct with a metal, a metal oxide, a ceramics or other ion-selective inactive material.

Fig. 4 shows an embodiment of the reference electrode formed in such a way as adhering the above-mentioned inactive polymer film with the surface of a piece of platina wire; where, formation of the inactive polymer film (43) on the surface of the platina wire (42) attached to the protective tube (41) will be able to play the part of a reference electrode by inserting it direct into a sample solution (3). The lead wire (44) connected to said platina wire (42) is to be connected to the measuring circuit.

Fig. 5 shows the graph indicating the performance of the potential response actually obtained with respect of the inactive polymer film electrode relating to the embodiments of devices shown in Fig. 2 to Fig. 4. On the basis of such a result that the performance of potential response is inactive, the potential difference between conventional reference electrode consisting of silver-silver chloride having a liquid junction and the inactive polymer film electrode relating to this invention is measured.

In Fig. 5, the data (31) relates to the thin film solidified from its mold made after dissolving polyvinyl chloride with tetrahydrofuran. The data (32) relates to the film made of fluororesin. In either data mentioned above, it is clear that a constant potential is generated independent of the concentration of $K^+$ ion in the sample solution.

Although an embodiment for $K^+$ ion is shown in Fig. 5, said film is also inactive to general ions existing in usual industrial or biochemical sample solutions such as $Na^+$, $Cl^-$, and $HCO_3{-}$, etc.

On the other hand, the data (33) shown in Fig. 5 indicates the potential response of the thin film solidified from its mold after dissolving the mixture of barinomysin ($K^+$ active material) with some assistant such as dioctyl sebacate in polyvinyl chloride with the medium of tetrahydrofuran which has been measured in the same way as mentioned above. An electrode equipped with said film is apparently ion-selective to $K^+$ ion.

In this case, mixing any inadequate medium, minute foreign matters, or improper assistant therewith will prevent inactivation of the membrane which is a main effect of this invention.

The data (36) in Fig. 5 indicates the output of a glass electrode responsive to pH and the data (35) in the same indicates the output of the reference electrode having the structure relating to this invention, where the former is active to pH but the latter is inactive to pH as shown there. The data (34) indicates that of the described device, which indicates a very stable performance.

The data (30) in Fig. 5 indicates the feature of a glass electrode having the structure inactive to $K^+$ ion, which is fairly inactive to $K^+$ in comparison with the data (33) for an electrode active to $K^+$. These data (31), (32), and (34) indicating the feature of the electrode equipped with an inactive polymer film relating to this invention exhibit little variation to any change of the concentration of the objective ions, indicating that said electrode equipped with an inactive polymer film is very stable as the reference electrode.

According to a specific embodiment of this invention, a small solid state reference electrode is formed by applying the inactive polymer film to the ion-selective field effect transistor (To be abbreviated to "ISFET").

The ISFET is covering the upside of the insulating layer of the channel between the source and drain of a field effect transistor having a source, drain and gate on the silicon chip (P) thereof with an ion-selective ion-sensitive film, which is a kind of semiconductor ion sensor that functions to detect the concentration of the objective ion in a sample solution by means of the output signal produced by changing the electric current flowing between the source and drain, by using the potential arising between the ion-sensitive film and the solution to be measured when the ion-sensitive film is brought into contact with a sample solution, as the input signal to the gate thereof.

In the ISFET inactive to ion according to this invention, the outermost surface of the electric insulating layer constituting the gate is covered with the inactive polymer film mentioned above and the electric current flowing between the drain and source will be kept constant independent of the concentration of a sample solution kept in contact with the gate, which functions to operate as the reference electrode.

Referring to Fig. 6, the above-mentioned mechanism is to be described as follows:

Fig. 6 shows an embodiment of the ion-inactive field effect transistor according to this invention, where the ion-selective ion-sensitive film (Ta$_2$O$_s$) attached to the outermost surface of the gate of the ion-selective field effect transistor having the source (64) drain (63), and gate (61) on the channel (P) thereof, that is, the surface of the insulating layer of the channel between the source and drain is covered with the ion-inactive polymer film (62). (65) is the hermetic seal component material (The electrodes of source and of drain are not shown here).

Although the ISFET has an important feature as a small sensor, the advantageous feature of its small size has not been made use of to the full so far as adopting conventional calomel electrode or silver-silver chloride electrode as the counter electrode.

It has become possible, however, to reduce the size of counter electrode, too, to much extent by applying this invention thereto, therefore making it possible to reduce the size of the whole electrode system to much extent.

For example, it is possible to form the electrode system (sensor assembly) in such a small size as a stomach examining camera; furthermore it is possible to form the electrode system in an extremely small size so that it may be possible to insert said electrode system into blood vessels in such a way as attaching the same to the end of an injector, too.

Furthermore, it is possible to minimize the size of electrode system because of capability of using the drain commonly if both the indicator ISFET and the ISFET constituting the reference electrode are formed on a common semiconductor base and they are connected to each other on said base, thereby allowing the analyses of any minute parts to be made.

Next, an embodiment where the plasma polymerization method is applied to the field effect transistor of reference electrode is to be described as follows:

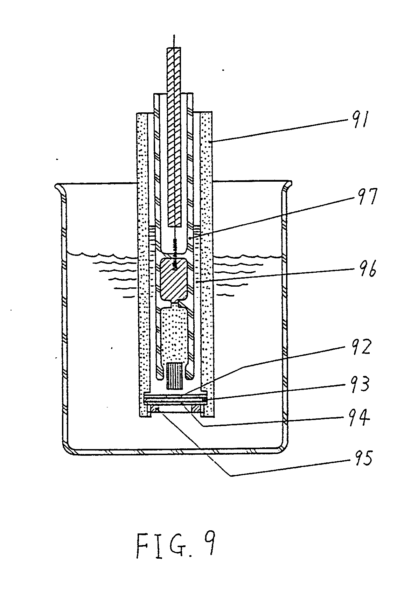

In Fig. 7, (71) is the channel of the field effect transistor, (72) is the silver film (approx. 100 Å thick), (73) is Ag$_2$S+AgCl film (approx. 500 Å), (74) is the ion exchange resin film containing Cl (approx. 500 Å), and (75) is the polystyrene inactive film (approx. 1000 Å) synthesized through the plasma polymerization method; where, the total thickness from the channel to the outside of inactive film is 2000 Å or less as formed by lamination; the manufacturing method of each layer of them is almost the same as those embodiments shown in Fig. 8 and in Fig. 9. (76) is the drain and (77) is the source. In case the outside of inactive film is in contact with the sample solution (78), the electric current flowing between the drain and source will be constant independent of the kinds of ions dissociated in the solution and of the concentration of them in the same, which can be used as a kind of ultra-small reference electrode in the same way as shown in Fig. 6, thereby capable of obtaining furthermore stable performance.

Depending on use, it is also possible to form the reference electrode relating to this invention on the base of ISFET commonly in the same way as shown in Fig. 6; furthermore, it is also possible to form such a needle type sensor as capable of being inserted into, for example, blood vessels.

Fig. 8 shows another embodiment of the reference electrode according to this invention; (81) is, for example, a silver plate of 6 mm in diameter and of 1 mm in thickness, (82) is 10 to 100 μm of thin film made by mixing silver chloride with silver sulfide, dissolving the mixture, and fixing it (hereinafter to be referred to as "AgCl+Ag$_2$S Film"), (83) is the thin film made of ion-inactive polymer such as polystyrene, etc., (84) is the lead wire, (85) is the stopper for the film, (86) is a 10 mm O.D. cylinder made of hard polyvinyl chloride, and (87) is a sample solution.

Fig. 9 shows the schematic drawing of the longitudinal sectional view of another embodiment of the reference electrode according to this invention; where, (91) is a thick wall (approx. 2 mm) of tube made of hard polyvinyl chloride, (92) silver plate (0.1 mm thick or less) plus (93) Ag$_2$S+AgCl Film plus (94) inactive film made of polystyrene are overlaid thereon in this order from up to down to form an incorporated membrane, which is fixed to the lower end of the tube (91) with the stopper (95). The inside of the tube (91) is filled with saturated potassium chloride solution (96) as the electrolyte into which the saturated calomel electrode (hereinafter referred to as "SCE") (97) is inserted to form an internal electrode there. (Hereinafter referred to as "internal solution type reference electrode", which belongs to the solid state reference electrode because it has no liquid junction).

Although some embodiments of covering a variety of materials with inactive polymer materials are

5

described above, in brief these materials such as metal, metal oxide, silicate (glass, etc.), chloride (AgCl), and sulfide ($Ag_2S$, etc.), etc. are available to be covered by inactive polymer. As mentioned below in another embodiment, however, interposing an ion-conductive material between a metal wire (or plate) and an ion-inactive film will be effective for obtaining electrodes of which properties are uniform.

Another advantageous feature of this invention is to use a polymer film formed through the plasma polymerization method as the part of reference electrode to be in contact with a sample solution.

Such matters have been corroborated through repetition of many experiments and the examinations and through introduction of electrochemical knowledge that special polymer films synthesized with the plasma polymerization method will be extremely non-responsive to variations of a variety of ions and/or to broad range of changes of the concentration of sample solution, that the surface thereof subjected to special aging treatment will improve the stability and life thereof, and that interposition of an ion-conductive or proton-conductive material between the polymer film and the metallic lead wire will be able to make solid and firm reference electrodes which are uniform in properties and in performance, resultantly capable of miniaturizing said reference electrodes.

Moreover, application of said new reference electrodes to potential-controlled electrolyses, that is, constant-potential electrolyses has been established as an important use thereof, found of a noticeable effect in the field of electrolytic industry, too.

Next, an embodiment of said polymer film, referring to Fig. 8, is to be described as follows:

As for the plasma polymerization method applied thereto, styrene monomer is filled in such a vacuum as approximately $10^{-2}$ Torr, glow discharging is made with 1 KHz AC current for approximately 30 seconds, and thereafter heating is made up to approximately 70°C followed by aging in the atmosphere of Ar gas for about 2 hours. The after-aging mentioned above is enough effective in the atmosphere of these gases such as hydrogen, nitrogen, helium, or fluorine, etc., too.

The electrodes made as mentioned above, as apparent in comparison with Fig. 1, have no liquid junctions, are solidified, and exhibit stable potential to variations of the chemical composition of sample solutions.

If assuming that a polystyrene thin film is perforated and the hole perforated constitutes a liquid junction, any potential making the Nernst Response to the activity of $Cl^-$ in a sample solution will be found because said sample solution will get in contact with the $AgCl+Ag_2S$ film.

Endorsing the above-mentioned theory, any potential difference responsive to the activity of KCl has been observed actually in such a way as the polystyrene film shown in Fig. 8 is optionally perforated a minute hole, is immersed in a variety of concentrations of KCl aqueous solutions, and the potential difference using conventional calomel electrode as the counter electrode is measured.

In case of a normal polystyrene thin film according to this invention (Refer to the electrode shown in Fig. 8), however, any other change of the potential on the polystyrene thin film than the potential of liquid junction arising on conventional calomel electrode used as the counter electrode is not observed; therefore, it is judged that the polystyrene thin film according to this invention has no minute pinholes thereon (at least passing $K^+$ or $Cl^-$ ion therethrough).

Next, in order to corroborate the effect of the embodiment of electrode relating to this invention shown in Fig. 8, experiments have been made of several kinds of ions as follows:

The results of experiments made as mentioned above are shown in Fig. 10, which have been obtained by measurement of the potential difference between said electrode and the counter electrode SCE having been used conventionally in the same way as mentioned above because it is impossible to measure the potential of said single electrode by itself.

Referring to Fig. 10, that some variation of the potential difference is observed within the low concentration zone of an electrolyte solution made of which concentration is known is presumed possibly due to any potential having arisen at the liquid junction of the SCE used as the counter electrode. Calculating the potential at the liquid junction and making its compensation depending on any difference of concentration between the concentration of an electrolytic solution made which is known of chemical composition and concentration and that of the internal solution (Saturated potassium chloride solution) of a SCE, it is found that the potential of the electrode relating to this invention has hardly been changed.

In order to indicate the high stability of potential of said electrode, the inclination of potential responsive to $Cl^-$ ion of a Ag-AgCl electrode is indicated by the line (Q) in Fig. 10. That is to say, it indicates that the potential of the reference electrode relating to this invention is kept constant to exhibit its performance required, avoiding a defect (Potential at liquid junction) the SCE on the basis of conventional technique adopted as a means for experiment has.

Although it cannot be said that the polystyrene used in an embodiment of this invention which has also active $H^+$ ions is non-active throughout all the range of pH, it is non-active at least within the range of pH 4 to 8.5; therefore, it may be highly available as the reference electrode in practical use because the range of pH of the body fluids of living bodies is relatively narrow, e.g., the pH of blood ranges 7.3±0.5.

Although the polystyrene film synthesized with the plasma polymerization method is used in an embodiment of this invention as mentioned above, the similar result to that shown in Fig. 10 is obtained of the xylene film synthesized through the plasma polymerization method, too. Besides, the similar results to those shown above are obtained of these films made of fluorine system and vinyl system, etc. synthesized with the plasma polymerization method, too, provided such a recent contrivance as adopting a teflon film perforated a number of minute holes thereon to prevent outflow of the internal solution seen in conventional reference electrodes is different from the reference electrode according to this invention in structure, function, and principle.

The fact that said electrode relating to this invention will not respond to the activity of $Cl^-$ ion as shown in Fig. 10 corroborates that the plasma synthesized film which is an embodiment of this invention shown in Fig. 8 does not have such minute holes as allowing ions to alternate with each other therethrough. That is to say, this invention will bring about new reference electrode displaying outstanding advantageous effects (such as producing no potential at the liquid junction nor any drift potential, preventing any alternation of materials with each other nor leakage therethrough) by means of a new measures different from conventional technique.

Besides, as to an embodiment of this invention shown in Fig. 9, a polystyrene film synthesized through the plasma polymerization method is used as the polymer film (94) and the similar result to that shown in Fig. 10 has been obtained of it, too, through experiment.

Next, an embodiment of this invention shown in Fig. 11 is to be described as follows:

Fig. 11 shows a solid state reference electrode consisting of combination of a 6 mm$\phi$ diameter of silver wire fixed to a film formed in such a way as óne side of a 25 μm thickness of cellulose plate is sputtered with Ag as thick as 5 μm and the other side of the same is subjected to glow discharging for 90 seconds to form a 7000 Å thickness of polystyrene film polymerized thereby from styrene monomer there ($5\times10^{-2}$ Torr, at room temperature, 10 KHz, and 1 Watt); where, (111) is the silver wire, (112) is the coated silver film, (113) is the cellulose film, (114) is the film with plasma polymerization method synthesized film, and (115) is the stopper for the film.

The above-mentioned electrode is immersed in a sample solution (116) and the following measurement is made:

1) The combination of said electrode with a sodium-ion-selective electrode is inserted into a NaCl aqueous solution and the potential difference (E) generated to each value of the activity of Na is subsequently plotted, obtaining the dash line (A) as indicated in Fig. 12.

In the same way as mentioned above, the combination of said Na selective electrode with conventional silver-silver chloride type reference electrode is inserted into said solution plotting the solid line (B) (Refer to Fig. 12).

As understood from these graphs mentioned above, they are almost coincided with each other in performance.

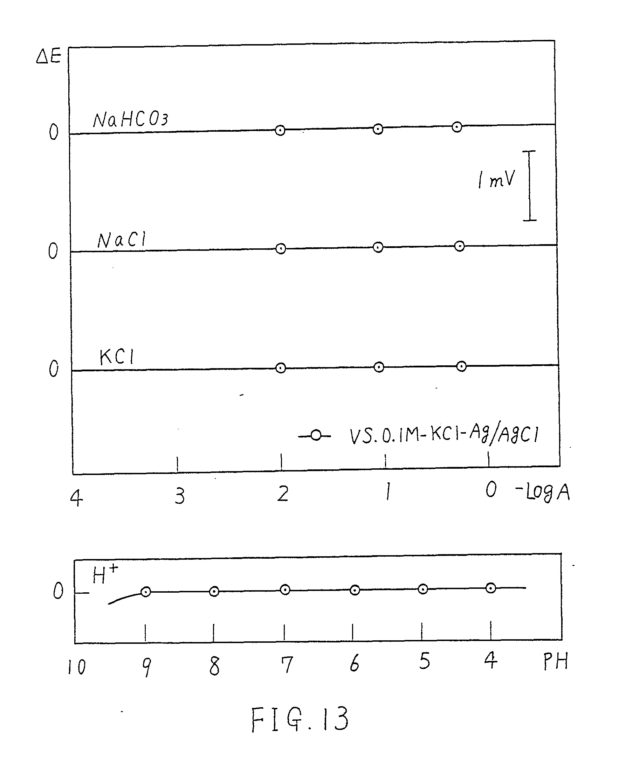

2) The potential difference to each kind of ion is measured in combination of said reference electrode relating to this invention with conventional silver-silver chloride (Internal solution 0.1 N-KCl) and has obtained the results shown in Fig. 13. No potential differences generated over broad range of concentration for these electrolytes such as $NaHCO_3$, NaCl and KCl. No potential differences generated within the range of pH=9 to pH=4 for $H^+$ ion, too.

From the above-mentioned results (1) and (2) obtained through experiments, therefore, it is corroborated that said electrode shown above in Fig. 11 is enough available as the reference electrode in the same as the silver-silver chloride electrode.

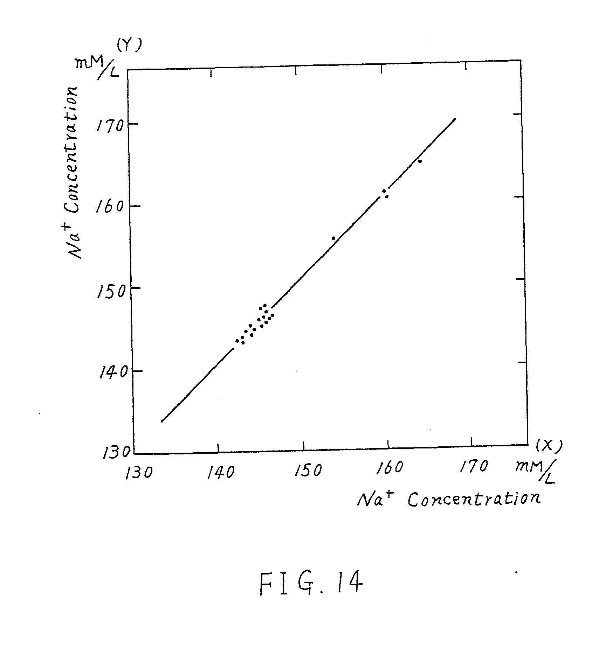

3) Fig. 14 shows the comparison of performance between said reference electrode shown above in Fig. 11 and conventional silver-silver chloride type reference electrode to the concentration of $Na^+$ ion contained in human blood serum; where each dot indicates the measurements of the same concentration of $Na^+$ ion, the abscissa (X) indicates the measurements in combination of conventional silver-silver chloride type electrode with the $Na^+$ selective electrode and the ordinate (Y) indicates the measurements in combination of the reference electrode according to this invention mentioned above in 1) with the same $Na^+$ selective electrode; both the results of them are fairly coincided with each other to be satisfied.

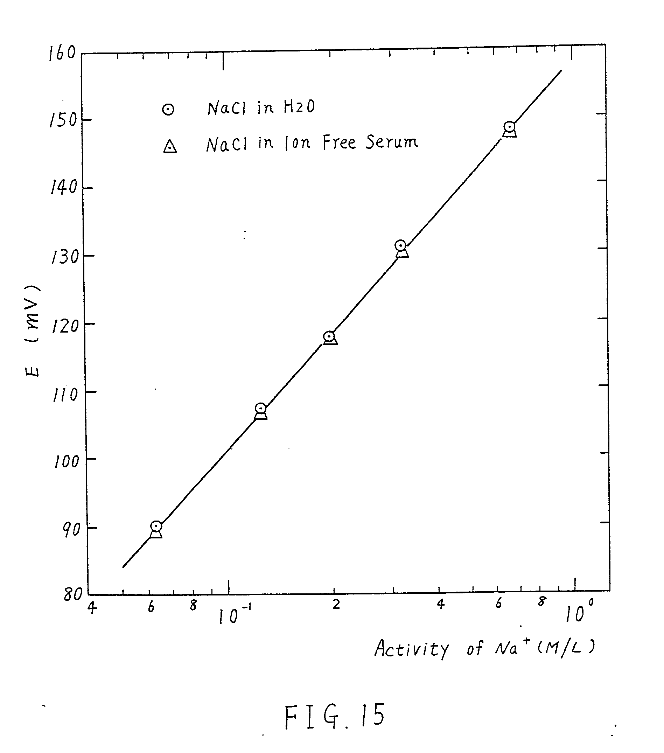

4) Fig. 15 shows the relation between the activity of $Na^+$ ion and the potential difference generated thereby in combination of the reference electrode shown above in Fig. 11 with the $Na^+$ selective electrode; where, complete coincidence of the measurements has been obtained between the case of NaCl aqueous solution (marked $\odot$) and the case of NaCl optionally dissolved in human blood serum (Ion free serum) (marked $\triangle$), which indicates that said reference electrode according to this invention can be applied to the measurement of the concentration of $Na^+$ ion in human blood serum, too.

5) Table 1 shows how each kind of organic hindering material will interrupt the measurement from being carried out properly in case of measurement of any inorganic electrolyte components contained in blood by means of the reference electrode according to this invention as mentioned above; where, the leftmost column shows the hindering material against the measurement, the middle one show the objective material for the measurement, the usual concentration range of hindering material in blood, and the concentration of hindering material in a sample, and the rightmost one shows the degree of hindrance (Note: The number in case of no hindrance is to be "100").

As understood from the table, adoption of the reference electrode according to this invention will make it possible to precisely make the objective measurement without being affected by much quantity of hindering materials over the usual concentration which are contained in blood.

TABLE 1

| Interferents | Normal concn. in blood | Tested concn. | Effect mM/l |
|---|---|---|---|
| | Enzymes | | |
| catalase | 2.0~4.8 g/l | 25 g/l | 100.4 |
| lipase | 14~280 IU/l | 1400 IU/l | 100.3 |
| | Proteins | | |
| albumin | 35~55 g/l | 50 g/l | 103.2 |
| fibrinogen | 2~4 g/l | 10 g/l | 103.3 |
| | Nitrogen compounds | | |
| glutamine | 500~830 μM/l | 4.2 mM/l | 101.0 |
| creatinine | 6.4~11.2 mg/l | 50 mg/l | 100.0 |
| uric acid | 35~79 mg/l | 400 mg/ll | 100.0 |
| | Hormone | | |
| thyroxine | 45~115 μg/l | 5 mg/l | 100.3 |
| | Sugars | | |
| lactose | 9~23 mg/l | 138 mg/l | 100.3 |
| glucose | 0.5~1 g/l | 5 g/l | 100.8 |
| galactose | 0~200 mg/l | 1 g/l | 100.0 |
| | Lipid | | |
| cholic acid | 0~3.4 mg/l | 34 mg/l | 100.5 |
| | Vitamins | | |
| vitamine B$_6$ | 30~80 μg/l | 400 μg/l | 100.0 |
| L-ascorbic acid | 2~9 mg/l | 60 mg/l | 100.4 |
| nicotinic acid | 16~50 μg/l | 20 mg/l | 100.4 |

As mentioned above, said reference electrode having a membrane made with the plasma polymerization method which relates to this invention will be non-responsive to any ions existing in every kind of electrolytic solution.

In order to further elucidate the properties of this membrane, the surface of a polystyrene film made through the plasma polymerization method is minutely observed by means of a scanning type electron microscope. As the result of observation, the comparison of the surface structure of said film with that of a commercial polystyrene film is shown in Fig. 16 to Fig. 19. Observing the surface structure of said film changing the frequency of plasma discharging variably, the part near the surface of film is observed as structured with relatively coarse particles as large as around 1 μm and the inside structure of the film is observed as structured minutely and closely through such range of frequency as 10 KHz to 100 KHz in the plasma discharging.

On the other hand, said plasma polymerized polystyrene film formed on a metal such as silver, aluminum, etc. will never be responsive to a variety of concentration of NaCl or KCl aqueous solution when immersed in it and thus it is clear that said film has no holes allowing to pass these ions therethrough.

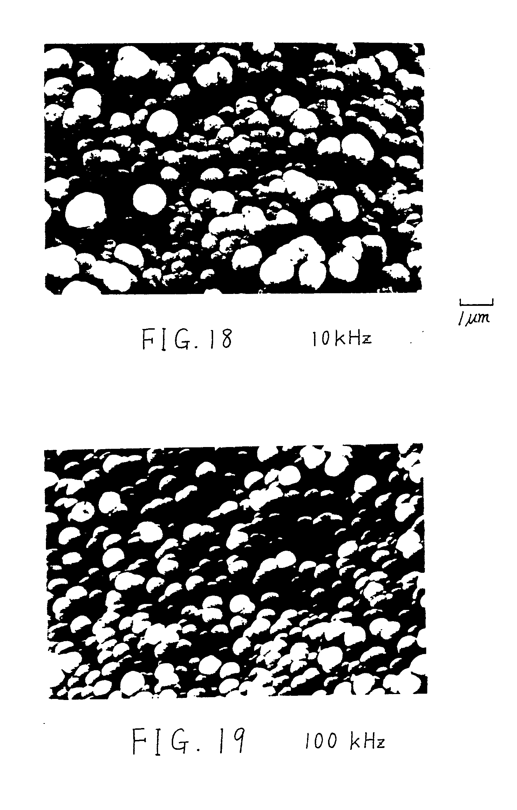

From the facts mentioned above, it can be said that although the polymers stuck to the film in the early stage of discharging during the plasma synthesized film will become structured more minutely as the bridge bonding proceeds by means of any additional discharging made thereafter, the polymers additionally stuck to the previous polymers will gradually become structured more and more coarsely, forming such degree of coarse particles as 1 μm or so as seen in Fig. 18 and Fig. 19. As the result, it has become clear that the film will have such a uneven structure in its sectional view therein the inside of the film is packed with minute particles tightly without any pinhole to allow the ions to pass, near the surface of the film the particles are formed more coarse gradually, as shown in Fig. 20 schematically. (Note: The Nos. shown in Fig. 20 are common to those shown in Fig. 11).

Therefore, although ionized solutions can get into the part near the surface of said film, they cannot get into the part of film which positions in the deepest thereof. Such structure of film can be formed favorably by the plasma polymerized films. In order to obtain the structure of film mentioned above, it is recommended to continue the plasma discharging for a fairly long time, for example, 1 to 5 minutes.

Therefore, if an electrode is constituted with a membrane of which surface part is subjected to the plasma polymerization method as shown in Fig. 11 in such a disposition thereof as the coarse structure thereof being faced outside and the electrode is immersed in a KCl aqueous solution heated a little higher than room temperature for 24 hours. Thus such a film electrode as having comprised K$^+$ and Cl$^-$ ions up to approximately half the thickness thereof will be formed. The part of said film which contains the K$^+$ and Cl$^-$ ions, so to speak, plays the part of a salt bridge. As the diameter of holes made on said film is minutely small and a number of holes are formed there complicatedly, the ions will not get away therefrom easily, which is very effective for the purpose of constitution of a reference electrode having stable performance.

Such a constitution of an electrode as interposing a polymer material (Cellulose) between an electron-conductive material and an ion-inactive polymer film which is different from the previous polymer material and its performance are as mentioned above since Fig. 11, but it is also possible to use another kind of polymer materials in place of cellulose and it is also possible to use these polymer materials such as xylene and epoxy, etc. in place of styrene as said inactive polymer material (Film). For example, it is also possible to use any other optionally selected metals such as W, Co, and Cu, etc. in addition to Ag and Al and besides C, etc. as said electroconductive material.

Next, the specified embodiments of this invention for applying it to electrochemical measurement and electrolytic industry are to be described as follows:

Although the internal resistance of general ion-selective electrodes is expected to be 10 MΩ or larger, usual voltmeters can be used in case the internal resistance of the reference electrode which is to be the counter electrode thereof is relatively small.

However, said reference electrodes having said polymer relating to this invention have as large internal resistance as 10 MΩ or larger in some cases which is larger than that of conventional type reference electrodes. Therefore, it is effective to use a difference voltage measuring system provided with the third electrode in juxtaposition.

Fig. 21 shows the schematic structure of the above-mentioned 3-electrode difference voltage measuring system; where, the ion-selective electrode (191) is a working electrode and any potential difference $(E_1-E_3)$ generated between said electrode and the third micro-electrode (193), e.g., a platina wire will be fed to the first amplifier (194). On the other hand, any potential difference $(E_2-E_3)$ generated between said reference electrode (192) relating to this invention and the above-mentioned third electrode (193) will be fed to the second amplifier (195). The difference of the outputs of the both amplifiers mentioned above will be indicated by means of the differential amplifier (196).

Although said third electrode will change the potential generated thereby depending on the kinds of sample solutions through the internal resistance is extremely small, any variation of the potential generated can be compensated completely, clearly meaning that the output signal $(E_x)$ of said differential amplifier is to be the potential $(E_1)$ of said ion-selective electrode (191) responding to the activity of a specified potential comprised in a sample solution. Not to speak of, temperature will affect the correlation between the activity of ion and the potential of electrode besides in the order of logarithm; therefore, they will be converted into signals respectively by means of the temperature compensating element (199) and converse logarithm computing circuit (197) and then will be indicated by the value of ion activity by means of the indicator (198).

Said 3-electrode difference measuring system can be applied to the ISFET, too, without modifying it. An embodiment of said measuring system in case of the ISFET is shown in Fig. 22; where the ISFET (Working electrode) (201), the reference ISFET (Reference electrode) (202), and the third electrode (203) are arranged in a sample solution (3), the electric currents (Ii and Ir) of the both electrodes are amplified by means of the amplifiers (204) and (205) respectively on the basis of the third electrode and then the difference (Ii−Ir) is indicated by means of the indicator (208).

Fig. 23 shows an embodiment of a special continuous fluid analysis system provided with said ion-inactive polymer membrane electrode relating to this invention.

Said 3-electrode differential measuring system (211) is to be provided in the first measuring bath (212) and in the second measuring bath (213) respectively, and a reagent having enough concentration, e.g., KCl water solution is to be flowed through both measuring baths comnicated with each other in a constant flow rate. The sample injection port (214) is provided at the middle position between both measuring baths, and a certain quantity of sample, e.g., silver nitrate water solution is injected thereinto, thereby $Ag^+$ will react with $Cl^-$ to precipitate in the form of silver chloride, resulting in reducing the concentration of $Cl^-$ contained in said sample responding to the quantity of $Ag^+$ (Volume×Concentration). Consequently, it will change the output signal transmitted from said 3-electrode difference measuring system (211) including the $Cl^-$ selective electrode corresponding thereto.

In case the above-mentioned injection is made in a certain quantity by means of an injector, etc. for a sample, the variation of the output signal of the two measuring baths will be formed making a peak as shown in Fig. 24; therefore, the area of said peaked curve or the height of said peak will be made in proportional to the concentration of $Ag^+$ contained in the sample.

As the difference measuring system by means of the first and second measuring baths is not required to keep the concentration of reference KCl water solution constantly so strictly, it will be very available for maintenance in continuous analyses in industries.

If a sample is continuously injected in a constant flow rate in another version in this case, the differential output signal in said system shown in Fig. 23 will not form a peak and any transient variations of the concentration of $Ag^+$ contained in the sample as time passes will be indicated continuously as shown in Fig. 25.

Fig. 26 shows an embodiment of this invention relating to the polarograph; where, (241) is a working electrode which is generally the dropping mercury electrode in practical case, (242) is the counter electrode which is generally the mercury pool electrode in practical case, (243) is a sample solution, (244) is said

9

reference electrode relating to this invention, (245) is the potential applying device driven by means of a constant-speed motor (M), (246) is the mercury pool, (247) is the negative feedback amplifier, and (248) is the electric current instrument.

As well known, the polarograph is a kind of chemical analysis method where the surface area of the dropping mercury electrode to that of the counter electrode is made enough small, a DC voltage is applied to between the two electrodes mentioned above assuming that the phenomenon of polarization will occur only on the surface of said dropping mercury electrode, and any variations of Electrolytic Current (i)—Voltage (E) as changing the applied voltage by inching are measured and dotted to form a curved graph thereby performing a quantitative or qualitative analysis. As a neck in practical cases, however, the potential of the mercury pool electrode will vary depending on the kinds of samples and the resistance of solution may become too large depending on the kinds of sample solutions, possibly producing any unexpected large errors between the intentionally applied voltage and the potential of dropping mercury electrode. For example, in case of analysis of the concentration of the oxygen dissolved in isopropyl alcohol by means of conventional polarograph, the curve of Electrolytic Current (i)—Voltage (E) (hereinafter referred to as "i-E curve") determined will be as shown by (A) in Fig. 27. The curve A is much different from the typical reduction wave curve of oxygen expected and therefore it cannot be expected to make the qualitative analysis of oxygen with the half-wave potential of the curve B.

On the other hand, if adopting the method relating to this invention, it is possible to obtain the typical i-E curve as shown by (B) in Fig. 27. In the Fig., the minute solid state reference electrode is provided near said working electrode. (Dropping mercury electrode); a current feedback is applied in negative direction by means of the negative feedback amplifier (247) so that the potential difference of said working electrode (241) to said reference electrode will be equal to the potential of the potential applying device (245) and thus an electrolysis is to be made with the negative feedback current mentioned above, thereby capable of carrying out the electrolysis providing an ideal potential.

The i-E curve determined by means of the system mentioned above will be as shown by (B) in Fig. 27, which is an ideal curve indicating the reduction wave of oxygen.

In the embodiment of this invention mentioned above, it is not required to provide a mercury pool electrode, etc. having enough large surface area as the counter electrode and besides it has such a convenience that previously determining the potential of said reference electrode (244) to the reference hydrogen gas electrode will allow the value of potential on the abscissa relating to the curve B shown in Fig. 27 to give the potential of said working electrode without modifying it independent of any kinds of sample solutions.

Next, an embodiment of this invention applied to an electrolytic system is to be described as follows:

In conventional technique for electrolysis, generally a pair of electrodes are inserted into an electrolytic solution and a DC voltage is given to between the electrodes to make the anion contained in the solution to deposit on the anode and on the other hand to make the cation in the same to deposit on the cathode. For example, in case of electrolysis for plating nickel by means of the wet type metal plating method, a metal to be plated with nickel and the counter electrode are to be inserted into an electrolyte comprising nickel ion and several volts of DC current is given to between them assigning said counter electrode to be the anode to make the nickel ion to deposit on the surface of said metal. In this case, however, the given voltage not necessarily will not determine the potential of said metal to be plated and it is the sum of the potential of counter electrode, the drop of iR voltage due to solution resistance, and the potential of said metal to be plated; therefore, the potential of said metal to be plated will fluctuate due to any variation of the composition of the electrolyte as the plating work proceeds (The resistance will increase), any variation of the resistance of solution caused by any heat generation involved, and/or any variation of the potential of counter electrode caused by any anion deposited on the same counter electrode, etc.; consequently, dropping of the potential of said metal to be plated will reduce the amount of nickel deposition, wasting electric current more and more. On the other hand, increasing the voltage to be applied will adversely let any metal ions co-existing with nickel in the electrolyte which will be reduced by more negative potential than nickel deposit on said metal together with nickel, deteriorating the quality of nickel plating to be made thereon. Therefore, it is recommended to proceed with the plating work by setting forward the electrolysis in such a way as restricting the potential to be a little larger than that for depositing the required ion.

Fig. 28 shows a constant-potential electrolytic system which functions to easily make a precise electrolysis, eliminating the above-mentioned difficulty; where, (261) is the electrolytic cell, (262) is the electrolyte, (263) is the working electrode (In case of plating, it is to be a metal to be plated), (264) is the counter electrode, (265) is the above-mentioned solid state reference electrode, (266) is the electrolytic potential setter, (267) is the voltage amplifier, (268) is the electrolytic potential control device, and (269) is the electrolytic current source. In said system, the potential between said reference electrode (265) and said working electrode (263) is so automatically controlled by means of said potential control device (268) as to be equal to the potential set by means of said potential setter (268) independent of these factors such as the kind of electrolyte, the concentration of the same, the magnitude of electrolytic current, and/or the kind of counter electrode.

As mentioned above in detail, the ion-inactive electrode provided with diaphragm relating to this invention has completely eliminated such necks the calomel electrode or the silver-silver chloride electrode having been adopted as the reference electrode conventionally in electrochemical analyses has as the

## 0 068 025

unstability of reference potential due to existence of any liquid junction and the inconvenience of handling thereof by means of such a special molecular structure of the surface of said polymer membrane as preventing any electron exchange reactions between said membrane and the ions contained in a sample solution kept in contact therewith.

Specially such a special reference electrode as provided with a polymer membrane synthesized with the plasma polymerization method not only has completely eliminated the unstability of reference potential due to existence of any liquid junction as seen in conventional reference electrodes for general voltammetry analyses and for each kind of electrolysis but also has made it possible to handle itself easily and to miniaturize the size thereof.

Any reference electrode is indispensable for measurement of the potential of a single electrode (Ion-selective electrode) specially in the field of potentiometry and thus said reference electrode relating to this invention will be sure to display the outstanding advantageous effects mentioned above to completely eliminate such necks conventional reference electrodes have as the unstability thereof and the uncertainness of measurement.

Possible availability for industries

Aforesaid reference electrodes according to this invention will possibly be much available broadly for these fields such as analytical chemistry, electrolytic industry, and diagnostic systems in medical science, etc.

### Claims

1. A reference electrode for use in the electrochemical analysis of an aqueous sample solution, comprising a membrane (114) made of a particulate polymer material inactive to any ions contained in the sample solution (116), said membrane being disposed so as to isolate those parts (111, 112, 113) of the reference electrode involved in the generation of a reference potential from the sample solution, the reference electrode being characterised in that the dimensions of the particles forming the membrane change, in a substantially continuous way, from coarse at the surface exposed to the sample solution to fine at the opposite surface, the structure of said membrane thereby being inhomogeneous with respect to its cross-section, the finest particles being so closely packed that the latter surface is impervious to ions and in that, within the interstices between said particles changing from coarse to fine, there is provided KCl forming a salt-bridge between the sample solution and the membrane.

2. A reference electrode as defined in claim 1, characterised in that said polymer membrane inactive to ions is coated on the surface of the ion-sensitive part of a semi-conductor ion sensing device.

3. A reference electrode as defined in claim 1, characterised in that said membrane is formed with a plasma polymerization method.

4. A reference electrode as defined in claim 3, characterised in that said plasma polymerisation is conducted with a low frequency plasma.

5. A reference electrode as defined in claim 1, characterised in that said membrane is coated on a substrate comprising an ion-conductive material formed on an electroconductive material.

6. A reference electrode as defined in claim 1, characterised in that said membrane is coated on a substrate consisting of another polymer material formed on an electron-conductive material.

7. A process of fabricating a reference electrode consisting of the steps of:

a) depositing by plasma polymerization an ion-inactive polymer membrane on a substrate comprising a material containing silver or platinum, said plasma polymerization being so controlled that said membrane exhibits an inhomogeneous structure with respect to its cross-section, the dimensions of the particles forming the membrane changing, in a substantially continuous way, from coarse at the outer face to fine at the surface applied on said substrate;

b) immersing said membrane obtained in step a) in the solution of an electrolyte containing KCl so as to introduce KCl salt into the interstices between the particles of said membrane.

8. A process as defined in claim 7, wherein said membrane is deposited over the surface of the gate region of an ion-selective field effect transistor.

### Patentansprüche

1. Bezugselektrode für die elektrochemische Analyse einer wässrigen Lösungsprobe, mit einer Membrane (114) insbesondere aus einem polymeren Material, das gegenüber jedem der in der Lösungsprobe (116) enthaltenen Ionen inaktiv ist, wobei die Membrane derart angeordnet ist, daß diejenigen Teile (111, 112, 113) der Bezugselektrode, die der Erzeugung eines Bezugspotentials dienen, von der Lösungsprobe isoliert sind, dadurch gekennzeichnet, daß sich die Größen der die Membrane bildenden Teilchen im wesentlichen in einer kontinuierlichen Weise von grob an der der Lösungsprobe zugeordneten Oberfläche bis fein an der gegenüberliegenden Oberfläche ändern, wobei die Struktur der Membrane dabei bezüglich ihres Querschnittes inhomogen ist, wobei die feinsten Teilchen so dicht gepackt sind, daß die entsprechende Oberfläche für die Ionen undurchlässig ist, und daß innerhalb der Zwischenräume zwischen

11

den von grob zu fein sich verändernden Teilchen KCl vorgesehen ist, das eine Salzbrücke zwischen der Lösungsprobe und der Membrane bildet.

2. Bezugselektrode nach Anspruch 1, dadurch gekennzeichnet, daß die gegenüber Ionen inaktive polymere Membrane auf der Oberfläche des ionenempfindlichen Teils einer Halbleiterionenregistriereinrichtung aufgebracht ist.

3. Bezugselektrode nach Anspruch 1, dadurch gekennzeichnet, daß die Membrane mittels eines Plasmapolymerisationsverfahrens hergestellt ist.

4. Bezugselektrode nach Anspruch 3, dadurch gekennzeichnet, daß die Plasmapolymerisation mit einem niederfrequenten Plasma durchgeführt wird.

5. Bezugselektrode nach Anspruch 1, dadurch gekennzeichnet, daß die Membrane auf einem Substrat aufgebracht ist, das ein ionenleitendes Material enthält, das auf einem elektrischleitenden Material gebildet ist.

6. Bezugselektrode nach Anspruch 1, dadurch gekennzeichnet, daß die Membrane auf einem Substrat aufgebracht ist, das aus einem anderen polymeren Material besteht, das auf einem elektrischleitenden Material gebildet ist.

7. Verfahren zur Herstellung einer Bezugselektrode mit den Schritten:

a) eine ioneninaktive Polymermembrane wird durch Plasmapolymerisation auf ein Substrat aufgebracht, das ein Material aufweist, das Silber oder Platin enthält, wobei die Plasmapolymerisation derart kontrolliert wird, daß die Membrane bezüglich ihres Querschnitts eine inhomogene Struktur aufweist, wobei sich die Größen der die Membrane bildenden Teilchen in einer im wesentlichen kontinuierlichen Weise von grob an der Außenseite bis fein an der dem Substrat zugewandten Seite ändern;

b) die so gewonnene Membrane wird in eine KCl enthaltende Elektrolytlösung getaucht, so daß KCl-Salz in die Zwischenräume zwischen den Teilchen der Membrane eingeführt wird.

8. Verfahren nach Anspruch 7, bei dem die Membrane über die Oberfläche des Wirkungsbereiches eines ionenselektiven Feldeffekttransistors aufgebracht wird.

**Revendications**

1. Electrode de référence destinée à être utilisée pour l'analyse électrochimique d'une solution aqueuse—échantillon comprenant une membrane (114) réalisée en un matériau polymère particulier insensible à tout ion contenu dans la solution-échantillon (116), ladite membrane étant disposée de façon à isoler les parties (111, 112, 113) de l'électrode de référence impliquées dans l'établissement d'un potentiel de référence à partir de la solution-échantillon, caractérisée en ce que la taille des particules formant la membrane, varie de manière continue d'une taille importante au niveau de la surface exposée à la solution-échantillon à une petite taille au niveau de la surface opposée, la structure de ladite membrane étant ainsi hétérogène en section transversale, les particules les plus fines étant si étroitement agglomérées que la dernière surface est imperméable aux ions en ce qu'à l'intérieur des interstices situés entre lesdites particules à taille échelonnée, on introduit du KCl formant un pont salin entre la solution-échantillon et la membrane.

2. Electrode de référence suivant la revendication 1, caractérisée en ce que ladite membrane de polymère insensible aux ions, est déposée sur la surface de la partie sensible aux ions d'un dispositif de détection d'ions à semi-conducteur.

3. Electrode de référence suivant la revendication, caractérisée en ce que ladite membrane est formée par un procédé de polymérisation en plasma.

4. Electrode de référence suivant la revendication 3, 4, caractérisée en ce que ladite polymérisation en plasma est réalisée avec un plasma à faible fréquence.

5. Electrode de référence suivant la revendication 1, caractérisée en ce que ladite membrane est déposée sur un substrat comprenant un matériau conducteur d'ions formé sur un matériau électroconducteur.

6. Electrode de référence suivant la revendication 1, caractérisée en ce que ladite membrane est déposée sur un substrat consistant en un autre matériau polymère formé sur un matériau électroconducteur.

7. Procédé de fabrication d'une électrode de référence, dans lequel:

(a) on dépose par polymérisation en plasma une membrane en polymère insensible aux ions sur un substrat comprenant un matériau contenant de l'argent ou du platine, ladite polymérisation en plasma étant régulée de telle façon que ladite membrane ait une structure hétérogène en section transversale, la taille des particules formant la membrane variant de manière continue d'une taille importante au niveau de la face extérieure à une petite taille au niveau de la surface appliquée sur ledit substrat;

(b) on immerge ladite membrane obtenue dans l'étape (a) dans une solution d'un électrolyte contenant du KCl de façon à introduire le sel de KCl dans les interstices entre les particules de ladite membrane.

8. Procédé suivant la revendication 7, dans lequel ladite membrane est déposée sur la surface de la grille d'un transistor à effet de champ spécifique à un ion.

FIG. 1

FIG. 2

FIG. 3

FIG. 4

FIG. 5

65  62  62  3  61  66

SiO₂

N⁺  N⁺

P

63  64

FIG. 6

FIG. 7

FIG. 8

5

FIG. 9

FIG. 10

FIG. 11

FIG.12

FIG.13

FIG. 14

FIG. 15

Polystyrene film on the market (thikness: 50 μm)

1 μm

FIG. 16

FIG. 17    1 kHz

FIG.18    10kHz    $1\,\mu m$

FIG. 19    100 kHz

FIG. 20

FIG. 21

FIG. 22

FIG. 23

FIG. 24

FIG. 25

FIG. 26

FIG. 27

FIG. 28